# EUROPEAN PATENT APPLICATION

(11) **EP 3 799 941 A1**
(43) Date of publication of application: **07.04.2021**
(21) Application number: 20187016.9
(22) Date of filing: 21.07.2020
(51) Int. Cl.: A63F 13/28, A63F 13/65, A63F 13/803, A63G 25/00

(54) **AUTONOMOUS DRIVING METHOD AND SYSTEM IN CONNECTION WITH USER GAME**

(30) Priority: 02.10.2019 KR 20190122395
(71) Applicant: KSEEK CO., LTD., Daejeon 34127 (KR)
(72) Inventor: KIM, Young-Real, 34127 Daejeon (KR)
(74) Representative: Ter Meer Steinmeister & Partner

(57) **Abstract**

The present invention relates to an autonomous driving technology that provides a safe entertainment content service by using an autonomous driving unit such as an autonomous vehicle or an autonomous driving drone. The autonomous driving unit includes a game module, a user module, a 4D module, and a driving module to provide the entertainment services. In the process of actually driving along the route information in a specific city or specific area by means of the autonomous driving unit, the users of participating in the entertainment service use the user module, so that it performs the user missions such as voting, question, quiz, photograph, action, etc., determines the result of the user's user mission, and reflects the result of the determination in the operation of the autonomous driving unit, thereby providing the entertainment service. This technology can be used for games that compete against two different users or teams by accumulating scores according to the operating of autonomous vehicles or by achieving a driving target in a short time. By sensing the driving condition of the autonomous driving unit, the tilting caused by the rotation of the autonomous driving unit, the vibration, the shock, etc., it outputs a 4D effect so that people who are on the remote model device receive the feeling, thereby enjoying a realistic racing game for remote participants. In addition, it suggests technologies for providing an entertainment service that expresses virtual obstacles in augmented reality and outputs noise and vibration generated by collisions or obstacles with 4D effects.

## Description

### Technical Field

The present invention relates to a method and device for changing a driving route or virtual autonomous driving characteristics according to a performance result of a specific mission given to a user of an autonomous driving unit such as an autonomous vehicle, an autonomous driving drone, or a robot that moves by autonomous driving.

In more detail, the present invention relates to a method and device for providing a user mission such as a quiz, questionnaire, voting, game, or the like that needs be solved by a user who has boarded an autonomous driving unit or a user who is not on board but is connected remotely, and reflecting a performance result of the user mission in driving of the autonomous driving unit.

In the whole specification, the 'user' is a person of performing a user mission by participating in driving of a specific autonomous driving unit, and may be a single user or a team composed of a plurality of users. The user is connected to at least one autonomous driving unit. The user may be a passenger of a specific autonomous driving unit or a person who has not boarded.

In the whole specification, the "competitor" means a team that competes for a specific team or a specific participant participating in the same game for a victory or rank, team participants, or a third party capable of having a competition record. Here, the third party capable of having the competition record may be a person or AI technology. That is, in the racing game in the present invention, teams including people can also be matched by racing games against teams driven by the AI.

In the whole specification, the expressions such as "user's autonomous(self) driving unit" or "team's autonomous driving unit" mean an autonomous driving unit that matches a specific participant or a specific team. The autonomous driving vehicle is interlinked with a driving device or matched with the driving device in an integrated form.

In the whole specification, the "driving mission" means the work that an autonomous driving vehicle must perform during the racing game. It includes a photo mission that takes a picture containing a specific location or object, a stationary mission that stops a driving for a certain period of time, and a transportation mission for carrying people, objects or animals on and off.

In the whole specification, the "4D simulation" or the "4D module" includes a driving device as one device or module that matches a specific autonomous driving unit, and serves to output driving state information of the autonomous driving unit as a 4D effect.

In the whole specification, the "user mission" is a task that a specific user needs to perform. It includes a vote mission in which several people decide opinions by voting, a quiz mission for solving the quiz, a vote mission in which multiple people ask for opinions, a photo mission that takes a picture of specific requirements, and an action mission for performing specific actions.

In the whole specification, the "route information" is information including driving targets and driving conditions etc. specified in a specific autonomous driving unit. The information on the driving target includes a starting point, a target point, a starting point, an ending point, a stop point, etc. Also, it may include only the driving distance and the time limit without the target point or the starting point.

The driving conditions included in the route information may include a speed control information, a virtual fuel information, a driving mission information, and a map information etc. The virtual fuel information or the speed control information is not actual fuel information of a specific driving device or actual maximum driving speed on a real road, but is virtual data managed for game progress. That is, they are virtual fuel information and speed control information.

In the whole specification, the "driving state information" further includes the actual information of the autonomous driving unit such as a driving speed of the autonomous driving unit, a vibration on the road surface, a posture information, an acceleration and deceleration, a direction change, an actual fuel amount, a driving start, a driving end, and a current position and so on; and the virtual information such as a virtual obstacle displayed in a racing game, a collision with an obstacle, and a virtual uneven effect or vibration according to an obstacle.

In the whole specification, the 'user module' receives mission performance information for the user's user mission and transmits it to the 'game module'. The user terminal outputs information related to the racing game.

In the whole specification, the 'driving module' is a module that transmits and receives data to and from the game module and allows the autonomous driving unit to operate.

In the whole specification, the 'mission performance information' refers to information including data transmitted to the game server as a result of performing a mission on the user mission or the driving mission. If there is a referee, it may be the result value input by the referee. In a quiz mission or a vote mission, the answer selected by the user becomes the mission performance information. For the action mission, it may be a video or 4D data of the action. In addition, in the method of providing items such as remittances, hearts, or stars, the data corresponding to the result thereof becomes the mission performance information.

In the whole specification, the expressions such as 'what of the team', 'what of the driving terminal', and 'what of the autonomous driving unit' may be the same expression. In the racing game, the team, the driving terminal, and the autonomous driving unit are connected equally one by one, so that the expression 'route information of the team' is synonymous with 'route information of the autonomous driving vehicle' and 'route information of the driving terminal' connected to the team. The 'driving status information of the team', 'driving status information of the autonomous driving unit' and 'driving status information of the driving terminal' are also used equally for the connected team, autonomous driving unit, and driving terminal.

In the whole specification, the 'game module' includes a game operation module for operating the game based on the autonomous driving unit and the game operation module determines the user's mission performance.

In the whole specification, the 'game module' refers to the game module included on the autonomous driving unit and the game module included in the game server at the same time. Even if the display codes are different, it is preferable that the two game modules have the same function. The basic functions that the game server must have are also provided in the game module.

The autonomous driving unit may be composed of one integrated autonomous driving unit and includes a driving module, a game module, a user module, and a 4D module.

Each module of constituting the autonomous driving unit may be configured to be separated from independent devices such as an independent server or a PC or a smart phone and connected to each other using network means, if necessary.

At this time, the game server including the game module is configured, the user terminal including the user module is configured, and the 4D module is configured in the 4D device. When it describes detailed functions or roles, even if the module, the terminal, or the device are used interchangeably, it should be regarded as the same expression.

### Background Art

There is an autonomous driving vehicle as a conventional technology. The autonomous driving vehicles are divided into six levels from level 0 to level 5, and levels 4 and 5 are classified as unmanned autonomous vehicles that can be operated without driving directly by means of person.

In 2018, Waymo, the world's first 4-level autonomous vehicle, launched a pilot taxi business.

Recently, the development competition for autonomous vehicles has been fierce and global automakers and online platform companies are leading the competition in autonomous vehicles. In general, autonomous vehicles are developed to safely drive the optimal route to reach their destination.

These conventional autonomous driving technologies have developed only in the form of safe driving. However, with the introduction of autonomous driving, it is difficult to provide game services by changing the driving route of the car or applying a changed driving effect to users who do not need to focus on driving.

### Disclosure

### Technical Question

Existing automobiles or autonomous vehicles are being developed with the role of safely and quickly transferring people or objects using automobiles. However, the present invention provides a base technology for allowing a user to enjoy games or content, which drives by adjusting route information of an autonomous driving unit or changing a driving condition to drive or applies a virtual driving condition based on competition that users play games or competes for collective intelligence such that an actual autonomous driving unit drives safely while complying with traffic regulations.

Existing vehicles or autonomous vehicles have been developed with the role of safely and quickly moving peoples or objects using automobiles, on the other hand, the present invention provides a base technology that allows an autonomous driving unit to drive safely while complying with traffic regulations by adjusting route information of the autonomous driving unit, changing driving conditions thereof, or applying virtual driving conditions thereof based on the collective intelligence between participants or competition for intelligence.

The problem to be solved by the present invention is to solve a technical problem for providing an entertainment service using an autonomous vehicle so that many people can enjoy leisure and to realize a profitable business that includes this process.

### Technical solution

In order to solve the above problem, the present invention proposes an autonomous driving method and an autonomous driving unit that receives performance data for a user mission of a specific user, determines the performance data of the user mission, and reflects the determined result to the driving of the autonomous driving unit.

The "user mission" includes a photo mission that takes a picture of specific requirements, an action mission for performing specific actions, a quiz mission for solving the quiz, and a vote mission in which multiple people ask for opinions and so on.

In the step of receiving the mission performance data, the mission performance data corresponding to data such as an answer, an action, and a photo is input for each user mission.

In the step of determining the performance result of the mission, it determines whether the correct answer has been answered for the quiz mission or not, determines by analyzing the voting results of users for the vote mission, determines whether the action is performed according to the given conditions for the action mission or not, and determines whether the photography meets the conditions for the photo mission or not.

In the step of reflecting the result of the user mission to the operation of the autonomous driving unit, it proposes methods in that it temporarily stops the operation, resumes the operation in the stopped state, operates by changing the operation speed, changes the operation route, or selects a specific operation direction.

The step of reflecting the determination result of the user mission to the operation of the autonomous driving unit is also configured to provide a virtual obstacle or a virtual accident situation. In this case, AR (augmented reality) technology that displays an image for displaying a virtual driving environment on a display may be grafted. In addition, it further includes a step of outputting a 4D effect for expressing a virtual collision, an irregular road surface, a left and right rotation, etc. for the autonomous driving unit.

In some embodiments, the reflecting of the result in the driving of the autonomous driving unit may be a step of driving by the autonomous driving unit in a manner comprising at least one or more of a first method of driving by further including a new point, a second method of driving by replacing a specific point with another point, a third method of determining a driving direction at a specific point, a fourth method of changing a driving route planned to drive in advance, a fifth method of driving without passing through a specific point.

In some embodiments, the reflecting of the result in the driving of the autonomous driving unit may include one or more of a first method of changing a driving speed, a second method of temporarily stopping the driving of a vehicle, a third method of outputting a virtual obstacle, a third method of outputting a virtual road surface state, an impact or vibration or a method for outputting content related to a virtual driving environment.

In some embodiments, the user mission may include at least one or more of a quiz mission to give an correct answer of a quiz, a voting mission to make a decision through voting of multiple users, an action mission to perform a specific action, and a photo mission to take a picture.

In some embodiments, the determining of the user mission information is may be performed according to at least one of a first method of automatically making a decision by a system or a second method of quoting a judgment result of a referee.

In some embodiments, the autonomous driving method may further comprise accumulating a score by determining a result of participating in a user mission or a driving mission for each of a plurality of users; and determining a rank based on the accumulated score for each user.

In some embodiments, the autonomous driving method may further comprise determining a performance result of a driving mission; and reflecting a determination result of the driving mission in a score of a user or a specific team or in determination of a game result.

In some embodiments, the autonomous driving method may further comprise transmitting 4D data obtained by filming a 4D motion in the autonomous driving unit; and outputting, by a 4D unit or a user terminal, the 4D data.

In some embodiments, the receiving of the mission performance information of the user may be a step of receiving mission performance information from other different users respectively matched to two or more autonomous driving units, may further comprise accumulating a score according to a user mission or driving mission for each of the autonomous driving units; and comparing victory/defeat or ranks by comparing times taken to complete driving or obtained scores.

In another aspect an autonomous driving system is provided in connection with a user game comprising an autonomous driving unit, wherein the autonomous driving unit comprises: a user module configured to receive mission performance information of a user with respect to a specific user mission; a game module configured to determine the mission performance information; and a driving module configured to reflect a result of the determination of the user mission in driving of the autonomous driving unit.

In some embodiments, the reflecting of the result of the determination by the game module may include at least one of a virtual vehicle accident, a virtual obstacle or a virtual driving environment.

In some embodiments, the user module may be a user module configured to output at least one of the virtual vehicle accident or the virtual obstacle or the virtual driving environment.

In some embodiments, the user module may further comprise at least one 4D unit for at least one of the virtual vehicle accident or the virtual obstacle or the virtual driving environment.

In some embodiments, the autonomous driving unit may film and transmit a 360VR video in real time.

In some embodiments, the user module may receive and output the 360VR video or may be replaced with a user terminal that outputs the 360VR video.

In another aspect an autonomous driving system is provided in connection with a user game including an autonomous driving unit, comprising: a user module configured to receive mission performance information of a user with respect to a specific user mission; a game server configured to determine the mission performance result and transmit a result of the determination to the autonomous driving unit; and a driving module configured to receive the result of the determination of the user mission from the game server and reflect the result of the determination in driving of the autonomous driving unit.

In some embodiments, the reflecting of the result of the determination by the game server in the autonomous driving unit may include at least one of a virtual vehicle accident, a virtual obstacle or a virtual driving environment.

In some embodiments, the user module may be a user module configured to output at least one of the virtual vehicle accident or the virtual obstacle or the virtual driving environment.

In some embodiments, the user module may further comprise at least one 4D unit for at least one of the virtual vehicle accident or the virtual obstacle or the virtual driving environment.

In another aspect an autonomous driving system is provided in connection with a user game including an autonomous driving unit, comprising: a user terminal configured to receive and transmit mission performance information of a user to a game server the with respect to a specific user mission, the game server configured to determine the mission performance result and transmit a result of the determination to the autonomous driving unit; a driving module configured to receive the result of the determination of the user mission from the game server and reflect the result of the determination in driving of the autonomous driving unit.

In some embodiments, the reflecting the result of the determination by the game server in the autonomous driving unit server may include at least one of a virtual vehicle accident, a virtual obstacle or a virtual driving environment.

The user module may be a user terminal configured to output at least one of the virtual vehicle accident or the virtual obstacle or the virtual driving environment.

In some embodiments, the user module may further comprise at least one 4D unit for at least one of the virtual vehicle accident or the virtual obstacle or the virtual driving environment.

### Advantageous Effects

According to the present invention, it is possible to provide an entertainment service using an autonomous driving unit to a plurality of users. That is, it is possible to provide a tour service for fun traveling through a specific area using an autonomous vehicle, or a game service in which multiple users compete using autonomous driving units on an actual road.

Autonomous vehicles and autonomous drones are on the rise among the most popular fields in connection with the fourth industrial revolution. Autonomous vehicles are expected to significantly change the consumption pattern of automobiles, and it is predicted that the sharing service of automobiles will increase and overall automobile consumption will decrease.

It is expected to have the effect of supporting new formats of entertainment content services based on autonomous driving units such as autonomous vehicles and autonomous drones. In addition, the usability of the autonomous driving units can be expanded by pioneering the genre of game services using autonomous driving units such as autonomous vehicles and autonomous drones.

### Brief Description of Drawings

The above and other objects, features and advantages of the present invention will be more apparent from the following detailed description taken in conjunction with the accompanying drawings, in which:
FIG. 1 shows a schematic diagram of an autonomous driving unit;
FIG. 2 is a schematic diagram of a user terminal; and
FIG. 3 is a schematic diagram of a game system based on an autonomous driving unit in which users of two teams participate in two or more autonomous driving units.

### [Reference Signs List]

100: autonomous driving unit
200: user terminal
300: game server

### Best Mode

### Mode for Invention

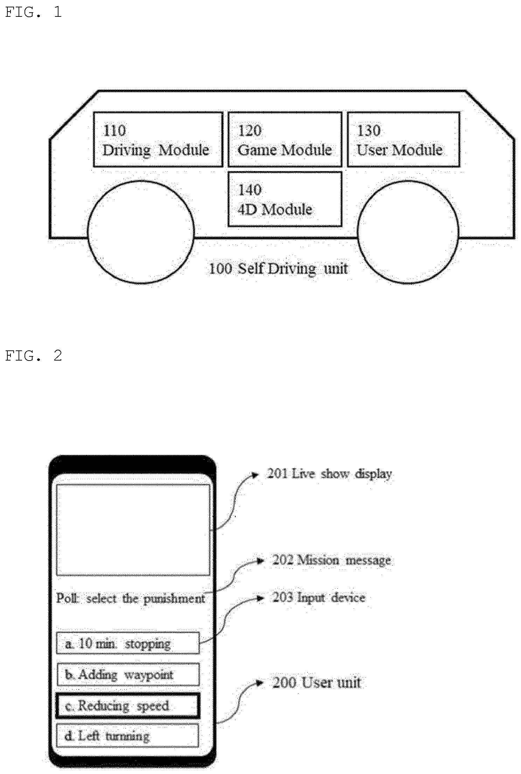

FIG. 1 shows a schematic diagram of a first embodiment.

The first embodiment of the present invention provides an autonomous driving unit including a driving module (110) that controls autonomous driving, a game server (300) that controls games, a user terminal (130) for performing user missions, and a 4D module (140) that outputs 4D effects. The modules included are configured to be included in the autonomous driving unit as unit components, and may be configured to exchange data with each other through digital communication or the like.

The unit module constituting the autonomous driving unit (100) may be configured using one or more components or independent devices. It is also possible that multiple modules constitute one component or one independent device.

The driving module (110) controls a function of allowing the autonomous driving unit to perform autonomous driving. Sensors such as lidars, radars, and optical cameras may be included, and precise map information may be included. The driving module (110) controls direction change, speed adjustment, stop, departure, and the like of the autonomous driving unit.

The driving module (110) is configured to safely drive according to a given external driving condition. That is, in the case of a vehicle, the driving module (110) allows the vehicle to drive on a road with a specified driving speed limit while maintaining an appropriate distance from other vehicles traveling together below the speed limit.

The driving module (110) may be composed of several PCs, servers, and the like, and is configured to be directly connected to the driving unit and control unit of the autonomous driving unit, if necessary.

The driving module (110) is provided with a means for re-establishing a driving route or decelerating constantly than the driving speed limit according to the determination of a game server (300) to reflect a determination result in the driving.

The game server (300) has game content to be presented to the user and a configuration scenario, and has a function for presenting and determining various user missions and driving missions.

The game server (300) has a function of determining whether or not the autonomous driving unit has driven completely, and may include a timer for checking the time spent for completion or checking a user mission timeout, software (SW) implemented with an algorithm for allowing each user to accumulate scores through user missions, and the like.

The game server (300) includes a storage device, and stores and manages various scenarios and content for providing a game service to a user.

The game server (300) includes additional functions such as GPS, map information, object recognition, and a local area network function, and includes means for determining a current position of the autonomous driving unit or determining whether it has approached a specific position or an object. When it is difficult to provide means for automatically performing such position determination, it is possible to input a referee's judgment to the user module (130) and the game server (300) may receive the judgment of the referee or another system and quote the judgement.

The user module (130) includes an input device such as a display for outputting a video, a speaker for outputting sound, an input device for receiving a user input such as a touch pad, a mouse, a keyboard, speech recognition, and the like. The user module (130) may further include a motion sensor capable of receiving a motion.

In the present invention, the user module (130) may be implemented with a user terminal (200) configured as a separate HW terminal, and it is interpreted that those included in the user module or the user terminal are applied in the same way.

An example of a game service provided by the present invention is a record game. A game service is provided to allow a plurality of users to travel on a given route at different times using one autonomous driving unit (100), and measure time taken for the users to complete the route.

During the driving of the autonomous driving unit, a score is obtained in the driving missions or user missions and accumulated. The game service is configured such that the ranks of the plurality of users are determined by the completion time or the total scores.

The game module (120) is configured to present various types of game scenarios, user missions and driving missions corresponding thereto, and the like. As content such as quizzes, voting, and photos of user missions, it is preferably to use content of areas or cities in which autonomous driving units travel.

In other words, in the case of a game service using an autonomous vehicle in the city center of Rome, it is possible to configure a quiz about Rome or to allow the autonomous vehicle to pass through a famous area in Rome. If the background is London, quiz content about London is provided.

For virtual obstacles and virtual road environments, it is desirable to utilize the content of cities or regions that serve as driving backgrounds. This is a method to show virtual reality images such as Socrates and his disciples crossing a street in an environment outside a display of the autonomous vehicle or a display of the user terminal when an autonomous vehicle which is traveling in a background of Athens slows down or stops due to the emergence of virtual people at a virtual crossing that appeared suddenly.

The game module (120) transmits and receives key information, such as driving state information and route information, to and from the driving module and a participant module frequently.

A specific autonomous driving unit may correspond to at least one user terminal, and the specific user terminal may correspond to at least one autonomous driving unit.

As another example of a game service, there is provided a game which allows a user to drive an autonomous driving unit to arrive at a designated target point within a designated time and determines a result as success/failure. The user can advantageously finish the game by performing the prepared user mission well.

In order to service this type of game, the game module (120) determines the ranking of a plurality of users or whether a user wins or loses based on the time taken for driving or the score obtained through the user's user mission after the plurality of users have performed driving in order.

Still another game service may be configured in such a manner that a plurality of autonomous vehicles of the same vehicle type is provided and multiple users compete in the same driving route at the same time.

The user module (130) additionally includes a function for receiving mission performance information in response to a user mission or a driving mission. The function for receiving mission performance information configures configure input functions such as a camera, a microphone, a motion sensor, and GPS.

The game module (120) includes a step of determining mission performance information for a user mission or a driving mission transmitted from the user module (130).

The game module (120) determines the mission performance information based on whether the correct answer of the quiz is satisfied for the quiz mission. Differentiated scores can be given based on whether the correct answer is completely satisfied or partially satisfied.

The step of determining the action mission in the game module (120) is to measure a motion related to the action and determine whether it meets the target motion or to receive input of a singing song, read the song, and perform determination for a mission of singing along a specific song.

The game module (120) has a function of reading and determining a picture to determine a photo mission.

When it is difficult for the game module (120) to determine whether the user mission and the driving mission are performed by itself, the game module (120) may be configured to be assisted by an external server capable of making a decision or to be assisted by a referee's judgment.

In order for the game module (120) to receive the decision of the referee in the step of determining of the user mission and the driving mission, there should be provided means for allowing the referee to input the judgment result, and a separate user module (130) or a user terminal (200) related thereto may be provided.

The game module (120) transmits a video or image related to the user mission or driving mission to the user module or user terminal of the referee when the judgment of the referee is necessary.

The judgement step is configured as when the game module (120) receives the judgment of the referee, the judgment result is input through the user module used by the referee or another user terminal and the user module receive the judgment result and quotes the same.

It is also preferable for the game module (120) to quote the judgment result of another system in relation to the user mission or the driving mission. This is a method of allowing users to participate in on-line games and receiving and quoting the results of the game as mission performance information. In the on-line game, whether win or lose of two or more users may be the judgment result, or whether a specific user passes a certain step of the game or participates in the game may be the judgment result. Also, whether the user participating in the on-line game may be included in the action mission.

The 4D module (140) is a device that allows a user to feel a 4D effect through physical impact or posture change, and may be configured with clothes to be worn or a chair capable of driving. The 4D module is configured to output 4D data that is configured to express the impact, deceleration, acceleration, and rotation of the vehicle.

The game module (120) allows a user to be penalized in such a way that if the user fails to successfully perform a user mission or a driving mission within a time limit, the user may be shocked by a suddenly appearing raised spot through the 4D module (140). It is possible to express a sudden stop or a sudden start and to display the effect of driving in a virtual driving environment.

The virtual driving environment may be a driving environment such as a unpaved road, a beach sand field, a gravel road, an unevenness or a raised spot, and a driving environment such as a rapid turn or riding on a horse or riding on a wagon may be applied.

The game module (120) may additionally include a function of outputting a video related to a virtual situation in relation to the user mission, driving mission, and penalty in the driving situation in a manner of synchronizing with the 4D effect output of the 4D module (140).

When the game module (120) transmits virtual video information or data related to the video information to the user module (130), the user module secures the virtual video information and outputs it to its own display or a connected display device.

In addition to the method of outputting only a virtual video, the user module (130) may also be configured in a method of additionally outputting a virtual video to an actual video taken outside the vehicle.

On the virtual video output by the user module (130), it is possible to display a collision with a virtual vehicle, a situation in which a road is destroyed by a rocket launched by a competitive team and driving is blocked, an object appearing as an obstacle on an external road (rocks, people, animals, or the like), or an event related to a historical event on a road or a crossing.

FIG. 2 is a schematic diagram showing an example of using a smart phone as a user terminal.

When a smart phone device is used as the user terminal (200), it is easier for multiple users to work as a team associated with a single autonomous driving unit.

Even when the user terminal (200) is separately used, it is desirable to use some functions of the user terminal (200) for a user module of the autonomous driving unit to operate complementarily. When a smart phone is used as the user terminal (200), a display or an input device may be limited. In this case, it is advantageous to connect a large scale display or various sensors installed on the autonomous driving unit to the user module to use the same complementarily.

When the user terminal (200) separately outputs vibration or shaking, it is also preferable to configure some functions of the 4D module in a way to support the user terminal (200). Although limited, it may be configured to output 4D data such as rotation, irregularities, acceleration, and deceleration.

In order to use the smart phone as the user terminal (200), it is configured in such a manner to develop and install SW that performs a user terminal function on the smart phone. Alternatively, a web browser or the like is used on the smart phone to operate the web application to enable the game module to operate on the smart phone.

An app that performs functions of the user module is installed on the smart phone to operate, and is configured to transmit and receive materials with the autonomous driving unit through communication means such as Bluetooth, WiFi, or the Internet.

In FIG. 2, although the user terminal (200) is displayed based on the smart phone, the independent user terminal (200) is not limited to the smart phone, but may be replaced with other types of hardware such as a tablet PC, a laptop PC, and a PC.

All functions of the user module (130) described above are configured to operate on the user terminal (200). It is also desirable that the user terminal (200) and the user module (130) of the autonomous driving unit provide user services complementarily.

The game module (120) is configured to induce participation in missions competitively with respect to a plurality of user terminals, and to give individual scores to those who have succeeded the mission. When a plurality of users participate in the same mission, the game module (120) adopts a method of recognizing a person who succeeds the mission within a predetermined rank as a success and giving a score.

A service is provided in which driving route information including a plurality of driving points is configured in the game module (120) and a game in which all autonomous vehicles have completed driving through the specified driving points. In this case, a driving mission is provided for each driving point.

The driving mission may be performed using the user module (130) or the user terminal (200). In this case, it is also possible to use a separate user terminal dedicated for the driving mission. This can be done by loading and moving a designated object from one driving point to another driving point, or by taking a specific target at a specific driving point.

As another example of a game service with the present invention, there is a tracking game service in which two or more autonomous vehicles participate, but some are an escape team that must achieve the purpose of escaping, and some are tracking teams that must catch the escape team.

The game module (120) groups a specific autonomous driving unit determined as an escape team and a user connected to it, and groups a specific autonomous driving unit determined as a tracking team and a user connected, and creates a game format including a user mission and a driving mission.

The game module (120) presents a driving route including a plurality of driving target points through which the escape team should pass. In addition, it provides various driving missions to be performed in the driving route.

The game module (120) provides a user mission to the escape team and reflects the mission result in the driving of the autonomous driving unit according to the user mission. When the user performs the mission well, the number of the driving target points to be driven is reduced or a part of the driving mission is reduced.

The game module (120) accumulates the scores for each user based on the determination results of the driving mission and the user mission to create the overall ranking information of the user.

The game module (120) configures an item for a penalty to be imposed on a corresponding team or user when a driving mission or a user mission is not performed or a reward to be imposed when the mission is well performed.

Penalties to be imposed by the game module (120) according to the results of the driving mission or the user mission may include encountering a virtual obstacle or reducing a virtual fuel, changing a driving route, and the like.

The rewards to be imposed by the game module (120) according to the results of the driving mission or the user mission may be removing a virtual obstacle, replenishing a virtual fuel, excluding a driving point, and the like. Alternatively, a specific team may be provided with a virtual weapon capable of attacking the opposing team. The virtual weapon may be a rocket cannon attack, obstacle installation, road blockage, pause, fuel reduction, and suspension of user activity.

The game module (120) displays a virtual obstacle on the user module (130) and provides a user mission for allowing a user to remove the virtual obstacle using the user module (130).

That is, a virtual video related to a line of a monkey swarm that appear as a virtual obstacle on the road is output, and the user transfers an input action such as throwing bananas that monkeys like to the monkeys or crawling as items to get rid of the monkey obstacle. The mission performance information is transmitted to the game module (130).

It is also preferable that the game module (130) receives the mission performance information and determines it as a user's action mission, so that some or all of the obstacles are removed.

Various user missions suitable for game elements are configured such as yelling or removing certain obstacles by acting in a certain pattern.

The game module (120) displays information on a specific user's attack right on the user module (130), and the user module (130) provides an interface for allowing a user to select a target to use the attack right.

The user selects a competitor to use a specific attack right through the user module (130) and receives an attack right execution and transmits to the game module (120). The game module (120) approves the attack right and applies the attack right to the operation of the autonomous driving unit that is an attack target.

For user missions performed by multiple users of a single autonomous driving unit, the mission performance results performed by the users together are operated as a criterion for determining the mission performance results of the autonomous driving unit. For example, when six users submit answers of a quiz mission, it can be configured in such a way that the mission is judged to be successful only if two or more persons give right answers.

The game module (120) receives from a plurality of user modules (130) and analyzes mission performance information for a voting mission to determine a desired driving direction from a plurality of driving directions and allows the driving module (110) to drive in a particular driving direction selected most frequently.

In response to the voting mission of the game module (120), the user module (130) provides a user interface for selecting one or more options from several options. In addition, an input device is provided to vote in a subjective manner.

The voting mission that the game module (120) selects through voting may be composed of user missions such as a user mission of selecting a penalty advantageous for its own autonomous driving unit or a user mission of selecting a penalty disadvantageous for a competitor's autonomous driving unit.

The game module may be configured to apply a criterion of performance failure when a predetermined number or more persons do not vote, and there is no option with a predetermined number or more votes, the voting mission is recognized as a failure.

The game module (120) is configured to help the driving of the autonomous vehicle by adding additional virtual fuel or by reducing penalties such as deceleration or pause when the user succeeds in the mission.

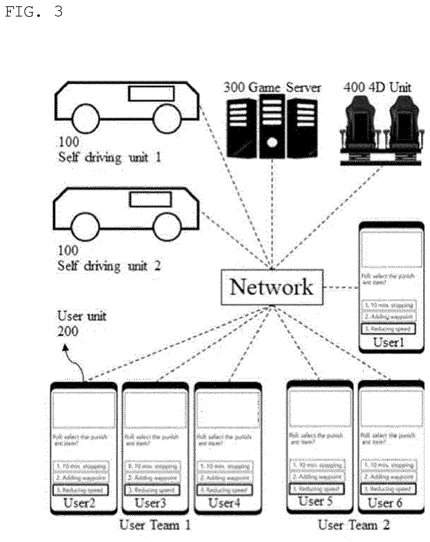

In FIG. 3, a plurality of users using the user terminal (200) are matched to two autonomous driving units with respect to users of each team. The game module in FIG. 1 is configured separately and independently to a game server, and the autonomous driving unit and users are connected to the game server (300) through network means such as the Internet, wireless communication, and Bluetooth.

When the game server (300) is configured as a separate server connected through a network, the game server (300) may be preferably configured with a plurality of servers, if necessary, and the autonomous vehicle is also configured to transmit and receive information through network means in order to reflect performance results of the user mission in the driving of each autonomous vehicle.

The game server (300) constitutes a combination of a plurality of autonomous driving units and user terminals, but is configured to provide a game service in which a plurality of users or teams participate simultaneously through a network.

The game server (300) is configured in the form of an independent server by configuring the main functions of the game module (120) for operation of the game.

The game server (300) is configured to independently perform the entire functions suggested by the game module (120) or, if necessary, the game server (300) and the game module (120) may be configured to work complementarily to each other while maintaining the game module (120) in the autonomous driving unit (100).

A user team 1 and a user team 2 are matched to an autonomous driving unit 1 and an autonomous driving unit 2, respectively. That is, there is provided a game service in which, when the autonomous driving unit 1 has completed driving first or scored more points, the user team 1 team wins the game, and when the autonomous driving unit 2 has completed driving first or scored more points, the user team 2 wins the game.

Some users of each team may participate in the game by riding in the autonomous driving unit, and some may participate in the game through remote access without having to ride the autonomous driving unit.

The game server (300) may, for a user mission and a driving mission, have a mission system that targets various subjects, such as a mission in which some users individually participate, a mission in which all or part of users of a specific team participate, and a mission in which all users participate.

When a plurality of users participate in a quiz mission at the same time, the game server (300) receives an answer, which is mission performance information, from a user terminal within a certain time and determines whether the answer is the correct answer. It is also desirable to determine in a manner of giving scores differently based on whether the answer is a perfect match, whether the answer is a partial match, or how long it took to give an answer.

When some users succeed in a mission in which a plurality of users simultaneously participate, the game server (300) determines that the user who has performed the mission after the success fails to perform the mission. In other words, when one user first gives a correct answer in a specific quiz mission, the other users does not receive a success decision or does not receive a score even when the other users participate in the quiz mission.

It is also preferable that the game server (300) additionally configures a server including a video streaming function as necessary.

The game server (300) provides a voting mission for a user of a specific team, determines the result, and reflects the result in the driving of the autonomous driving unit of the host team or the competitor's autonomous driving unit. When voting results are reflected in the driving of the host team, it is possible to determine the driving in a direction more advantageous for the game, and to interfere or make the driving of the competitor's autonomous driving unit difficult through the voting results.

That is, the game server (300) provides a voting mission to make an advantageous decision for the driving of the host team, or give penalty to make it difficult for the competition team to drive.

Each autonomous driving unit is configured to transmit a 360VR video, a video, a motion, sound, or the like to the game server (300) or the user terminal (200) in real time. In this case, the game server (300) is configured to further include a streaming server to perform transmission to other clients through a network.

Motions for the 4D effect of the autonomous driving unit (100) may be filmed in such a way to perform measurement in real time using a motion sensor of the smart phone installed in the autonomous driving unit and perform conversion into 4D data.

A separate external motion sensor may be installed in or connected to the autonomous driving unit or the smart phone to perform measurement in real time using the same motion sensor and perform conversion into 4D data.

The 4D data filmed by the autonomous driving unit or the smart phone is transmitted in real time to the 4D unit (400) and the user terminal (200).

The 360VR video of the game server (300) is configured based on wired/wireless communication such as installing a 360VR video camera and connecting a network to the smart phone supporting 5G through a hotspot or utilizing Bluetooth.

The user terminal (200) receives and outputs materials such as a 360VR video, a video, a motion, and sound from the game server (300) or the autonomous driving unit (100).

The 4D unit (400) is installed and configured independently of the autonomous driving unit and is connected to the game server (300), the user terminal (200), and the autonomous driving unit (100) through network means to transmit and receive data.

The 4D unit (400) may be in the form of a model device that can be boarded by a user, is manufactured in the form of a chair that can be seated, and is configured to include a 4D simulation module and a network module.

The 4D unit (400) is provided with means for receiving the 4D data filmed by the autonomous driving unit (100) and outputting the 4D effect.

The 4D unit (400) is implemented to allow a user who did not board the vehicle to experience the driving environment of the autonomous driving unit of a host team.

The 4D unit (400) is configured to express a virtual 4D effect to be applied to the autonomous driving unit of the host team.

The 4D unit (400) is configured to include its own network communication interface to receive 4D data from the autonomous driving unit or game server, or is configured to receive 4D data from a user terminal by connecting with a user terminal and output 4D effects in real time.

The user terminal (200) also has a function of receiving the 4D data and outputting the same in real time, and a function of outputting 360VR data such that 360VR data can be viewed.

In FIG. 3, the present invention may be configured as an example of a configuration for a racing game in which team 1 and team 2 are connected to the autonomous driving unit 1 and the autonomous driving unit 2, respectively, and are operated simultaneously. Here, the autonomous driving unit 1 and the autonomous driving unit 2 are autonomous vehicles of different models manufactured by different automobile manufacturers.

The user team 1 has three users, user 2, user 3, and user 4, and the user team 2 includes two users, user 5 and user 6.

The game server (100) provides a simple quiz mission to assign two autonomous vehicles of different models to the teams. The quiz mission is a subjective question and presented to the user terminals of five participants at the same time.

When each of the five users inputs an answer that they think as a correct answer to the user terminal, the user terminal transmits the answer to the game server (300).

The game server (300) gives the team of the user who first gave the correct answer an authority to select one among the two autonomous vehicles.

Assuming that User3 gave the correct answer, the game server (300) presents a voting mission for selecting one of two autonomous driving units to all members belonging to the team 1. The voting is closed within a limited time, and the game server (300) assigns a vehicle model most selected to the team 1 and the remaining vehicle model to the team 2.

The game server (300) may assign two route information from among two or more route information to the teams through such mission performance method.

The game server (300) prepares and stores a plurality of route information. The route information may be determined as start and end points, or may be set in a form of passing through a major stopover. The game server (300) assigns route information to each autonomous vehicle, and the autonomous vehicle starts driving according to each route information.

The game server (300) allows each team to designate attack and avoidance rights. It is preferably designed to give attack and avoidance rights as gifts when completing a user mission or driving mission.

In the racing game, the attack rights enable each team to interfere with the opposing team's driving in a manner of stopping the opposing team for a certain time, having them to encounter a virtual obstacle while driving, adding a specific stopover, or the like.

In the racing game, the avoidance rights are provided in a form of skipping the driving of the route information in some sections or invalidating a specific obstacle.

Related information is transmitted to user terminals belonging to a team such that all or part of the members of the team 1 may use the attack right and the avoidance right, and the user terminal (200) has output and input functions to select an attack target so as to use the attack right or permit the use.

The game server (300) needs to be configured to designate a specific participant for each team as a leader of the team and to be an object which an attack or avoidance right or a user mission or driving mission is to be performed. It is also possible to perform a voting mission in a step where a specific participant is determined to be a leader of the team, and it is desirable that some of the performers are in charge when making a game broadcast.

The game server (300) may provide a voting mission as an additional user mission so as to determine an attack right or an avoidance right as collective intelligence of multiple parties. Based on the voting results, the contents according to the attack and avoidance rights may be reflected.

When the user uses the attack right to the opposing team, the user terminal (200) receives attack right use information and transmits it to the game server (100). When receiving the attack right use information from the user terminal of a specific team, the game server may determine whether the use of the attack right is possible, approve it, adjust the route information of the opposing team, and transmit the related information to the driving module (110). The driving module (110) receives the adjusted route information and applies it to driving of the autonomous vehicle.

The game server (300) may be configured to provide route information from the start to the end to the specific driving module. As another method, the game server (300) divides the entire route information into several section units and provides the route information of the sections to be completed sequentially to be transmitted to the driving module (110).

In a case where the game server (300) is configured to transmit route information consisting of several sections to the driving module (110) in a stepwise manner, when a time delay penalty is applied to a specific autonomous vehicle, it is also possible to configure a method of providing route information of the next section to the driving module (110) as late as the delayed time after the route information of a specific section is completed.

The game server (300) configures route information of a specific autonomous driving unit by further adding mission information. The mission information to be performed by the driving module of an autonomous driving unit includes things that can be done in the field, such as a method of arriving through a specific location, a method of taking a picture of a specified target, and a method of receiving a specific object.

The game server (300) further adds information on virtual fuel information and the maximum driving speed to the route information. Here, the fuel information is not actual fuel information of an autonomous vehicle.

The fuel information enables the autonomous vehicle to determine whether to stop and resume driving, or what the maximum driving speed is to be. When driving is continuously performed according to the specified route information, the fuel is deducted. In an actual racing game, fuel information may be displayed in points or other formats.

The autonomous vehicle is configured to drive at a speed whichever is lower between the maximum driving speed of the route information and the legal maximum driving speed of a road on which the autonomous vehicle actually drives. It is also preferable to set the maximum driving speed in a manner of specifying a change amount than an actual speed limit such as -10 km/h, -20 km/h.

When the fuel is equal to or greater than a certain amount, the driving speed of the autonomous vehicle is set to the maximum speed that is permitted on the road, and when the fuel is less than the certain amount, the maximum driving speed is adjusted to be lowered to a predetermined speed.

The game server (300) transmits a user mission to the user terminal (200) to allow people participating in the game to be prevented from running out of fuel.

When the user input the mission performance information to the user terminal (200), the user terminal (200) transmits the corresponding information to the game server (300) and the game server replenishes the specified amount of fuel.

The user mission which the game server (300) provides for refueling may include solving quizzes, viewing advertisements, inputting specific data, and taking mission photos. Depending on whether a condition is satisfied, the fuel may not be replenished or the amount of fuel to be replenished may be adjusted.

The game server (300) preferably displays fuel as a number in units of quantity, but may also display the fuel as the number of items such as points, hearts, and stars. It is also preferable to operate fuels, points, items, or the like in multiple ways.

The game server (300) transmits the driving state information and a part or all of the route information of the autonomous driving unit participating in the racing game to the user terminal (200). The user terminal (200) receives and outputs the driving state information and route information.

The game server (300) transmits video materials related to the progress of the game to the user terminal.

The user terminal (200) receives the video materials and displays it thereon.

When there is information related to an obstacle of virtual reality in the video material, the obstacle is displayed on the display of the user terminal (200) to be visible, and information related to mission performance of users for removing the obstacle is received and transmitted to the game server (300).

The game server (300) may be provided with means that, when the virtual obstacle is a rock, allows the user terminal to display a virtual rock on the screen of the real road using the AR technology, and allows the user to remove an obstacle through a user mission in which the user pulls the virtual rock or touches the screen in the form of hammering that breaks the rock.

When it is assumed that the obstacle is a cat, the game server (300) provides a photo mission in which a user takes a picture of the cat and transmits the picture, and the game server (300) receives a cat picture from a plurality of users and then removes the cat obstacle.

In order to remove the obstacle, it may be additionally configured that the participant pays a price by paying a certain electronic money or points.

The game server (300) provides penalty in which the user or the participating team makes a detour through another route or is delayed for a certain time while the obstacle is not removed. As another penalty, disqualifying the user's qualification, ending the game, suspending a certain period of time, elimination, and the like are given.

When the autonomous vehicle of a specific team receives a driving attack from the opposing team, it is preferable to inform the user terminals of the team members of the specific team of information related to the use of the attack right of the opposing team.

When there are three or more autonomous vehicles and two or more opposing teams, the user terminal (200) may be configured to further include a function of selecting an opposing team to attack.

The game server (300) provides mission information to the user terminal (200) so as to secure an item used for an attack right of the opposing team.

When the user completes the mission, the game server (300) grants an attack right to the corresponding team or the corresponding participant, and transmits information on the attack right to the user terminal (200).

The game server (300) receives information on the attack right, outputs it for use by the user, and has an input tool to use the attack right.

When the user inputs information of using the attack right, the user terminal (200) transmits information on the target autonomous driving unit to which the attack right is to be applied and information related to the attack right to the game server (300).

The game server (300) finally configures a step of determining a result of the autonomous driving unit-based racing game. The game server (300) determines the result of the racing game according to a method of determining the ranking based on the driving results of a number of autonomous vehicles, a method of determining victory and defeat with respect to competitors, and a method of determining success or failure of the driving results.

The game server (300) reflects performance results of the driving mission of the autonomous driving unit matched to a specific user in the result determination of the racing game. That is, the fact that the corresponding user wins when the driving mission is well performed or the driving is completed in a short time is reflected in the result determination of the racing game of the autonomous vehicle.

The game server (300) further includes determining whether a specific autonomous vehicle has been completed to satisfy route information. Whether a specific autonomous vehicle has completed the route information is configured such that a driving result such as scores or success/failure is reflected in the game determination based on whether the autonomous driving unit has successfully passed a starting place, a destination, a waypoint, or the like, the time taken to complete the route information, or whether the driving mission has performed.

The game server (300) converts a score at which the driving mission has passed, the time taken to complete the driving, and the degree of completion of the route information into numerical values and reflects the driving result in the game result determination.

It is preferable that the game server (300) manages the scores by separately reflecting the result of performing the user mission for each specific participant or team. In addition, scores are managed by reflecting the performance result of user missions by each participating team. In addition, the performance results of the user mission of a specific user or team may be reflected to determine the result of the racing game.

The game server (300) determines the game result and displays or announces the ranking of the autonomous driving unit or the participating team or the user matching the autonomous driving unit. Relevant information is posted on the Internet or transmitted to the user terminal (200).

The game server (300) further includes a step of adjusting a driving route of a specific autonomous driving unit using collective intelligence by collecting judgments of a plurality of users constituting a team. Here, the collective intelligence is applied in such a manner to analyze the opinions of several users in real time and reflect them in the racing game. The simplest method is to allow a user to select a competitor through a voting mission and select an attack right to use. Alternatively, it is also preferable to support to select one of several driving conditions of a host autonomous driving unit.

Another method for adjusting the route information using the collective intelligence of the game server (100) is to use a quiz mission. It is configured in a method to suggest different words that contain specific letters or spelling and give an attack right or replenish virtual fuel to a team that succeeded first.

Users endeavor such that a driving route advantageous to their autonomous driving units are applied while performing a user mission. The performance of the user mission may be to give a correct answer for a specific quiz question, perform a specific action, or mimic sound. The performance of a user mission by the user may be a method of performing input to a user terminal using a specific input device. An input method may be configured by using a method of shaking a user terminal up and down or left and right, a method of clicking a specific icon displayed on the display of a user terminal, and the like.

FIG. 2 shows a schematic diagram of a user terminal. The schematic diagram of FIG. 2 is a user terminal using a smartphone, and a touch pad on which a display and an input function operate together is displayed on the screen. Separately, input functions such as a microphone and a camera are configured, and a GPS function and a network function are further included.

The user terminal (200) has a live show section displaying a real-time streaming area received from a broadcast relay device and a driving terminal or a game server. In addition, it can be seen that there is a section displaying a user mission and a section in which a mission performance result of the user mission is input.

The user terminal (200) displays the route information, the driving state information, or the like of the autonomous driving unit on the display such that the users can recognize it. The vibration function of the smartphone is used to represent vibrations due to collision or irregularities in the driving state information.

The user terminal (200) is configured to directly receive and display streaming video of an Internet TV through a network such that users can watch it. In this case, the user terminal may be configured to watch TV broadcasts using an additional device separated as a separate function.

Another embodiment for game broadcasting in which a large number of unspecified viewers participate will be described with reference to FIG. 3.

In a game studio, there are cast members, a host, and audiences participating in racing games. People who use user terminals to participate in racing games become audiences or cast members.

In each family, viewers who want to participate in the racing game install an application that performs functions of a user terminal on user terminal devices such as their smart phones or tablets and participate in the racing game.

The game studio's cast members are popular celebrities, and viewers may be their fans. In the game studio, the cast members constitute two teams, and the viewers may choose their favorite team to participate in the game.

The game server (300) is configured to select a part of the route information by using collective intelligence as a kind of penalty or driving mission for a specific team. That is, it is possible to present a voting mission in which multiple participants vote to select a specific target point or a left or right turn at a crossroad to be appeared next to all user terminals (200) belonging to a specific team.

Using the user terminal (200), users vote for the voting mission, and the game server (300) analyzes the voting results and adjusts the route of a specific autonomous driving unit according to the voting results selected by many people to perform driving. The autonomous driving unit may be a specific user or a specific team or competitor.

The game server (300) additionally assigns and calculates a score related to an activity to a user. That is, in the case of participating in a user mission or giving a correct answer for a specific quiz, scores are accumulated for individual participants and an individual user having the highest score is finally rewarded.

The game server (300) is configured such that the individual participant is rewarded according to a method selected from ranking announcement, winner announcement, online gift certificate or souvenir payment notice, prize payment notice, prize payment, gift payment, etc.

It is preferable that the game server (300) constructs and produces various types of games as user missions such that viewers can voluntarily contribute to the victory of a team to which they belong. Here, a quiz mission to solve a quiz, a voting mission to vote, a proof photo mission to take a special picture at a certain point or the like may be applied.

It is preferable that the game server, the user terminal, the autonomous driving unit, the 4D unit, and the like are configured independently with a separate device and a SW performing a function, and preferably transmit and receive a variety of information through a network communication means. On the other hand, two or more devices separated in functional units may be connected through the network communication means to perform a single function.

The game server (300) may be configured to include several devices separated from each other according to detailed functions.

In the present invention, the game server, the user terminal, the 4D unit, the autonomous driving unit, and the like may be configured to operate on one device in which two or more functions are integrated as needed.

When performing each function on one device, the game server, user terminal, and 4D unit may be configured as an integrated device composed of modules and operation parts corresponding to respective functions rather than independent devices.

In the present invention, when two or more functional units among the game server, the user terminal, the 4D unit, the autonomous driving unit, or the broadcast relay device are configured to be integrated into one system, transmitting or receiving data between the two functional units may be achieved by transmitting or receiving related materials by sharing a network communication means or a memory or a storage space, or through communication between processors.

In the present invention, 'driving state information' and 'route information' do not necessarily constitute all of the relevant detailed information disclosed in the present specification, but are combined in such a way as to include only part of configuration information necessary to configure an actual service.

### Industrial Applicability

The present invention is intended to be used in the broadcasting business and entertainment business, which is a business group of KSEEK Co., Ltd. The KSEEK Co., Ltd. has an interactive broadcasting platform that participates in quizzes and questions with a large number of people participating at the same time, and is preparing an entertainment service based on an autonomous driving vehicle as an expansion project in this area. The entertainment services include interactive autonomous driving game shows and responsive autonomous city tour services etc.

## Claims

1. An autonomous driving method for an autonomous driving unit (100), comprising:
receiving mission performance information of a user with respect to a specific user mission;
determining a result of performance from the mission performance information; and
reflecting the result of the determination of the user mission in driving of the autonomous driving unit (100).

2. The autonomous driving method of claim 1, wherein the reflecting of the result in the driving of the autonomous driving unit (100) is a step of driving by the autonomous driving unit (100) in a manner comprising at least one or more of a first method of driving by further including a new point, a second method of driving by replacing a specific point with another point, a third method of determining a driving direction at a specific point, a fourth method of changing a driving route planned to drive in advance, a fifth method of driving without passing through a specific point.

3. The autonomous driving method of claim 1 or 2, wherein the reflecting of the result in the driving of the autonomous driving unit (100) includes one or more of a first method of changing a driving speed, a second method of temporarily stopping the driving of a vehicle, a third method of outputting a virtual obstacle, a third method of outputting a virtual road surface state, an impact or vibration or a method for outputting content related to a virtual driving environment.

4. The autonomous driving method of any one of claims 1 to 3, wherein the user mission includes at least one or more of a quiz mission to give an correct answer of a quiz, a voting mission to make a decision through voting of multiple users, an action mission to perform a specific action, and a photo mission to take a picture.

5. The autonomous driving method of any one of claims 1 to 4, wherein the determining the result of performance of the user mission information is performed according to at least one of a first method of automatically making a decision by a system or a second method of quoting a judgment result of a referee.

6. The autonomous driving method of any one of claims 1 to 5, further comprising:
accumulating a score by determining a result of participating in a user mission or a driving mission for each of a plurality of users; and
determining a rank based on the accumulated score for each user.

7. The autonomous driving method of any one of claims 1 to 6, further comprising:
determining a performance result of a driving mission; and
reflecting a determination result of the driving mission in a score of a user or a specific team or in determination of a game result.

8. The autonomous driving method of any one of claims 1 to 7, further comprising:
transmitting 4D data obtained by filming a 4D motion in the autonomous driving unit (100); and
outputting, by a 4D unit (400) or a user terminal, the 4D data.

9. The autonomous driving method of any one of claims 1 to 8, wherein the receiving of the mission performance information of the user is a step of receiving mission performance information from other different users respectively matched to two or more autonomous driving units, further comprising:
accumulating a score according to a user mission or driving mission for each of the autonomous driving units; and
comparing victory/defeat or ranks by comparing times taken to complete driving or obtained scores.

10. An autonomous driving system for a user game, the system comprising:
an autonomous driving unit;
a user module configured to receive mission performance information of a user with respect to a specific user mission;
a game module configured to determine the mission performance information and transmit a result of the determination to the autonomous driving unit; and
a driving module configured to reflect a result of the determination of the user mission in driving of the autonomous driving unit.

11. The autonomous driving system of claim 10,
wherein the reflecting of the result of the determination by the game module includes at least one of a virtual vehicle accident, a virtual obstacle or a virtual driving environment, and
wherein the user module is configured to output at least one of the virtual vehicle accident or the virtual obstacle or the virtual driving environment.

12. The autonomous driving system of claim 10 or 11, further comprising at least one 4D unit for at least one of the virtual vehicle accident or the virtual obstacle or the virtual driving environment.

13. The autonomous driving system of any one of claims 10 to 12, wherein the autonomous driving unit is configured to film and transmits a 360VR video in real time, and
wherein the user module is configured to receive and output the 360VR video.

14. The autonomous driving system of any one of claims 10 to 13, wherein the user module, the game module and driving module are comprised in the autonomous driving unit.

15. The autonomous driving system of any one of claims 10 to 14, wherein the user module is a user hardware terminal separate from the autonomous driving unit and/or the game module is a game server external to the autonomous driving unit.
